# EUROPEAN PATENT APPLICATION

(11) **EP 3 786 466 A1**
(43) Date of publication of application: **03.03.2021**
(21) Application number: 19382726.8
(22) Date of filing: 26.08.2019
(51) Int. Cl.: F16B 37/04

(54) **FASTENING NUT**

(71) Applicant: Illinois Tool Works Inc., Glenview, IL 60025 (US)
(72) Inventor: Martín Mariño, Iván, 08205 BARCELONA (ES); Domenech Guxens, Helena, 08520 Les Franqueses del Vallès (ES)
(74) Representative: HGF

(57) **Abstract**

The fastening nut comprises a nut body (1) provided with an internally threaded housing (2), wherein said nut body (1) comprises a fitting zone (3) having a substantially polygonal section, and said nut body (1) can also comprise a tube (4) defining said internally threaded housing (2).

The purpose of the present invention is to provide a nut that enables assembly from the top and at the same time gives a more ergonomic installation with a screwdriver or even without any tools.

## Description

The present invention refers to a fastening nut, that provides a more ergonomic installation with a screwdriver or even without any tools.

### Background of the invention

Airbags are security systems that are mounted in vehicles that are deployed in case of a collision and are subjected to a great pressure due to the gas that inflates the bag very quickly.

Therefore, the airbags must be fixed in the vehicle in a very secure way to prevent their detachment during their use.

This fixation is usually carried out by fixation elements comprising nuts and screws, and due to the great number of fixation elements, their installation requires a lot of time and manpower, which increase the installation costs.

Therefore, one purpose of the present invention is to provide a nut that enables assembly from the top and at the same time gives a more ergonomic installation with a screwdriver or even without any tools.

### Description of the invention

With the nut according to the present invention it is possible to solve said drawbacks, providing other advantages that are described below.

The fastening nut according to present invention comprises a nut body provided with an internally threaded housing, wherein said nut body comprises a fitting zone having a substantially polygonal section.

This feature enables assembly from the top and at the same time gives a more ergonomic installation with a screwdriver or even without any tools.

Preferably, said nut body also comprises a tube defining said internally threaded housing and a transition zone extending from the fitting zone to said tube, said transition zone having a dome shape.

According to a preferred embodiment, said fitting zone has a substantially square section.

Furthermore, the nut body comprises at least one retention leg, preferably four retention legs extending from each of the sides of said substantially square section.

Said at least one retention leg or retention legs also comprise(s) a clamping element, such as a clipping tongue or a boss.

Furthermore, said nut body comprises support surfaces, and preferably said support surfaces are placed in the vertexes of the substantially square section of said fitting zone.

Advantageously, a ramp is placed between a support surface and the adjacent retention leg. Said ramps facilitates the rotation and concentrates the stresses/loads in the suitable zones.

Said fitting zone comprises preferably at least one recess, in particular, a plurality of recesses that facilitate the releasing of the rotation, the assembly of the nut and limit the displacement of the screw that is inserted in the threaded housing.

Said at least one retention leg or each retention leg comprises a pair of abutment edges at the end in contact with the fitting zone.

### Brief description of the drawings

For a better understanding the above explanation and for the sole purpose of providing an example, some non-limiting drawings are included that schematically depict a practical embodiment.

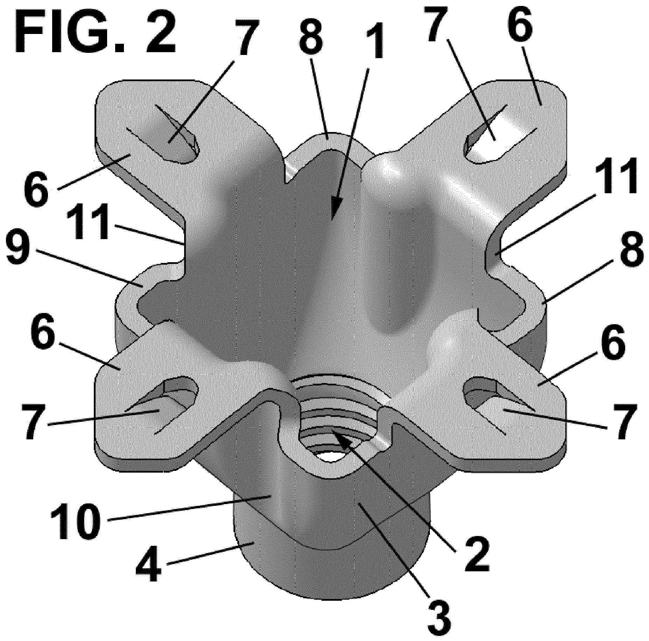

Figures 1 and 2 are perspective views of the fastening nut of the present invention, according to first embodiment;
Figure 3 is a perspective view of the present invention, according to a second embodiment;
Figure 4 is a perspective view of the initial step for mounting the fastening nut according to the present invention;
Figure 5 is a perspective view of the fastening nut according to the present invention in the assembled position; and
Figure 6 is an elevation view of the fastening nut according to the present invention mounted in its use position.

### Description of preferred embodiments

The fastening nut according to the present invention is used for fastening two elements to each other, e.g. for an airbag.

The fastening nut comprises a nut body, identified generally by numeral reference 1, comprising a fitting zone 3, that it fitted in a hole of one of the elements to be fastened, a tube 4 defining a threaded housing 2 and a transition zone 5.

The fitting zone 3 has a substantially polygonal cross-section, preferably a substantially square cross-section, that matches with the hole where the fastening nut is fitted.

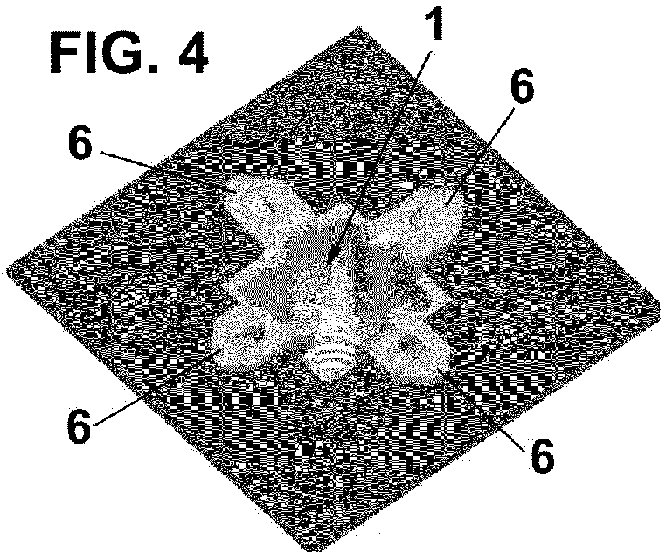

The tube 4 comprises an internal thread defining said threaded housing 2 that houses a screw (shown in Fig. 4) for fastening said two elements to each other.

The fastening nut also comprises retention legs 6 protruding from the sides of the fitting zone 3, in particular, from the end opposed to the tube 4. According to the shown embodiment, the retention legs 6 are four, one from each side of the square section of the fitting zone 3.

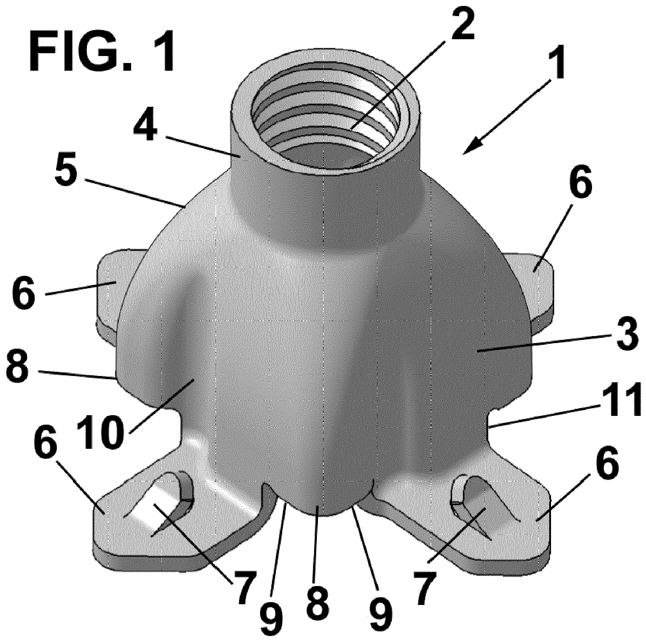

Furthermore, each retention leg 6 comprises a clamping element 7, according to this first embodiment a clipping tongue, which protrude from the retention leg 6 towards the fitting zone 3, as shown in Fig. 1.

At the vertexes of said square section of the fitting zone 3 there are placed support surfaces 8, defined between two ramps 9, so that the ramps 9 contact the retention legs 6 by corresponding abutment edges 11.

The fastening nut also comprises recesses 10 placed in said fitting zone 3. In particular, according to the shown embodiment, the recesses 10 are four, one at each face of the fitting zone 3.

According to this embodiment, each recess 10 is elongated and extends perpendicular with respect to the retention legs 6.

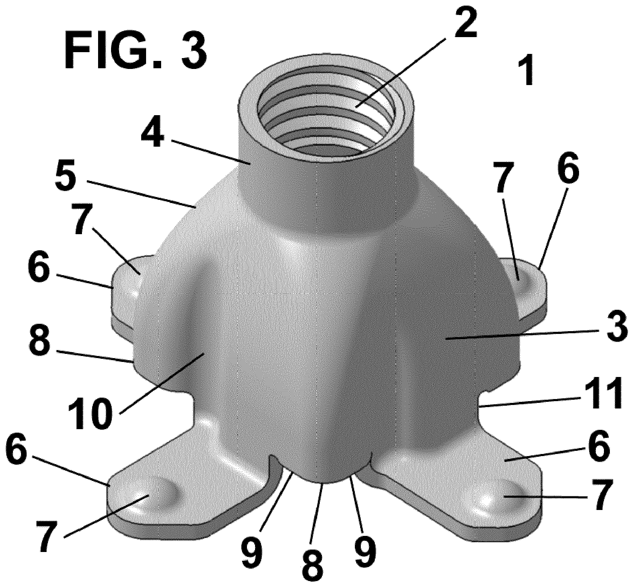

A second embodiment of the fastening nut according to the present invention is shown in Figure 3. The only difference between this second embodiment and the first embodiment is that the clamping elements 7 in the retention legs 6 are bosses and not clipping tongues, but their function is the same.

The fastening nut according to the present invention can be assembled in two different ways.

In a first way, the nut is preassembled then the screw is assembled, including three steps.

To assemble the fastening nut according to the present invention, it only has to be placed (in any direction) in a square hole (Fig. 4). The four retention legs 6 will keep the nut centered and avoid it from falling through the hole.

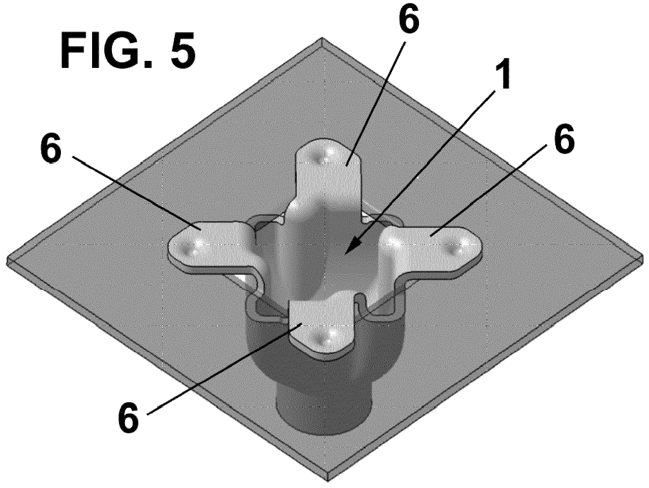

The working position is 45° rotated with respect to the initial position (Fig. 5). With the help of a screwdriver, it is inserted inside the fitting zone 3 diagonally and support the blade of the screwdriver against the recesses 10.

The screw driver is pushed and rotated in a clock-wise direction. The ramps 9 ease the rotation, avoiding interferences between the nut and the elements to be fastened.

At the same time, it will help concentrate the forces away from the hole edges. The nut will stop rotating when the hole edges meet the abutment edges 11 in the nut. At this point, the nut will have rotated 45° and the clipping tongues 7 will be clipped in the elements to be fastened.

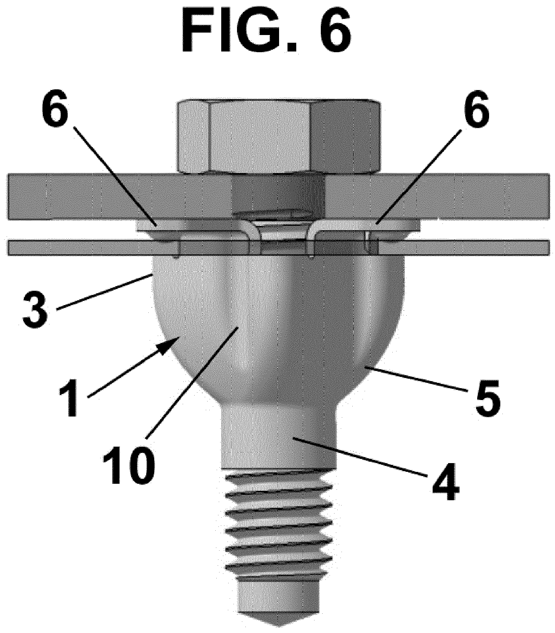

This final assembled position (shown in Figs. 5 and 6) gives four support surfaces 8 in contact with the elements to be fastened. The clipping tongues 7 prevent the nut from rotating backwards.

According to a second type, the fastening nut according to the present invention can also assembled in two steps.

To assemble the fastening nut according to the present invention, it only has to be placed (in any direction) in the squared hole. Its four retention legs 6 keep the nut centered and avoid it from falling through the hole (Fig. 4).

The working position is 45° rotated with respect to the initial position (Fig. 5).

The other element is placed on top of the nut and the screw is put through the other element and inside the nut. The assembly is screwed in clock-wise direction.

The threaded tube 4 makes the nut to rotate before it is screwed. The ramps 9 ease the rotation avoiding interference between the nut and the elements to be fastened. At the same time, it helps to concentrate the forces away from the hole edges.

The nut stops rotating when the hole edges meet the abutment edges 11 in the nut. At this point, the nut will have rotated 45° and the clipping tongues 7 are clipped in one of the elements to be fastened.

This final assembled position (shown in Figs. 5 and 6) gives four support surfaces 8 below one of the elements to be fastened. The clipping tongues 7 prevent the nut from rotating backwards.

Even though reference has been made to a specific embodiment of the invention, it is obvious for a person skilled in the art that the fastening nut described herein is susceptible to numerous variations and modifications, and that all of the details mentioned can be substituted for other technically equivalent ones without departing from the scope of protection defined by the attached claims.

## Claims

1. Fastening nut, comprising a nut body (1) provided with an internally threaded housing (2), **characterized in that** said nut body (1) comprises a fitting zone (3) having a substantially polygonal section.

2. Fastening nut according to claim 1, wherein said nut body (1) also comprises a tube (4) defining said internally threaded housing (2).

3. Fastening nut according to claims 1 and 2, wherein said nut body (1) also comprises a transition zone (5) extending from the fitting zone (3) to said tube (4).

4. Fastening nut according to claim 1, wherein said fitting zone (3) has a substantially square section.

5. Fastening nut according to anyone of the previous claims, wherein the nut body (1) comprises at least one retention leg (6).

6. Fastening nut according to claims 4 and 5, wherein the nut body (1) comprises four retention legs (6) extending from each of the sides of said substantially square section of the fitting zone (3).

7. Fastening nut according to claim 5 or 6, wherein said at least one or each retention leg (6) comprises a clamping element (7).

8. Fastening nut according to anyone of the previous claims, wherein said nut body (1) comprises support surfaces (8).

9. Fastening nut according to claims 4 and 8, wherein said support surfaces (8) are placed in the vertexes of the substantially square section of said fitting zone (3).

10. Fastening nut according to claims 5 and 9, wherein a ramp (9) is placed between a support surface (8) and an adjacent retention leg (6).

11. Fastening nut according to anyone of the previous claims, wherein said fitting zone (3) comprises at least one recess (10).

12. Fastening nut according to claim 5, wherein said at least one or each retention leg comprises a pair of abutment edges (11) at the end in contact with the fitting zone (3).

13. Fastening nut according to claim 3, wherein said transition zone (5) has a dome shape.
